(19) Europäisches Patentamt
European Patent Office
Office européen des brevets

(11) **EP 2 446 215 B1**

(12) **EUROPÄISCHE PATENTSCHRIFT**

(45) Veröffentlichungstag und Bekanntmachung des Hinweises auf die Patenterteilung:
**18.06.2014 Patentblatt 2014/25**

(21) Anmeldenummer: **10739846.3**

(22) Anmeldetag: **17.06.2010**

(51) Int Cl.:
*G01S 11/02* (2010.01)    *G01P 3/66* (2006.01)
*F41A 21/32* (2006.01)

(86) Internationale Anmeldenummer:
**PCT/EP2010/003637**

(87) Internationale Veröffentlichungsnummer:
**WO 2010/149307 (29.12.2010 Gazette 2010/52)**

(54) **VERFAHREN UND VORRICHTUNG ZUR MESSUNG DER MÜNDUNGSGESCHWINDIGKEIT EINES PROJEKTILS ODER DERGLEICHEN**

METHOD AND DEVICE FOR MEASURING THE MUZZLE VELOCITY OF A PROJECTILE OR THE LIKE

PROCÉDÉ ET DISPOSITIF DE MESURE DE LA VITESSE INITIALE D'UN PROJECTILE OU ANALOGUES

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **26.06.2009 DE 102009030862**

(43) Veröffentlichungstag der Anmeldung:
**02.05.2012 Patentblatt 2012/18**

(73) Patentinhaber: **Rheinmetall Air Defence AG 8050 Zürich (CH)**

(72) Erfinder: **FRICK, Henry Roger CH-8442 Hettlingen (CH)**

(74) Vertreter: **Dietrich, Barbara Thul Patentanwaltsgesellschaft mbH Rheinmetall Platz 1 40476 Düsseldorf (DE)**

(56) Entgegenhaltungen:
**EP-A2- 0 023 365    DE-A1-102006 058 375**

**Beschreibung**

Die Erfindung beschäftigt sich mit der Thematik der Baulängenreduzierung eines insbesondere als Hohlleiter betriebenen Waffenrohres. Als Hohlleiter gilt ein Rohr mit einer charakteristischen Querschnittsform, das eine sehr gut elektrisch leitende Wand besitzt. Technisch weit verbreitet sind vor allem Rechteck- und Rund-Hohlleiter.

Eine Methode, das Rohr als runden Hohlleiter zu betreiben und die Dopplergeschwindigkeit des Projektils im Rohr zu messen, ist in der EP 0 023 365 A2 nachlesbar. Die Frequenz des Signals liegt dabei über der Grenzfrequenz für den betreffenden Hohlleiter-Mode. Die sich dabei aufbauende elektromagnetische Welle breitet sich im Rohr aus und wird vom Projektil reflektiert. Zudem ergibt sich eine, von der momentanen Geschwindigkeit abhängige Dopplerfrequenzverschiebung. Aus dieser wird dann eine Mündungsgeschwindigkeit des Projektils ermittelt.

Die DE 10 2006 058 375 A1 schlägt dagegen vor, das Waffenrohr bzw. das Abschussrohr und/oder Teile der Mündungsbremse als Hohlleiter zu nutzen. Dieser Hohlleiter wird jedoch unter der Grenzfrequenz des betreffenden Hohlleiter-Mode betrieben.

In der nicht vorveröffentlichten DE 10 2008 024 574.7 wird dieselbe Problematik aufgegriffen, wobei eine Variabilität des Abstandes zwischen den Kopplern und der individuellen Wahl des Abstandes je nach Modenselektion des Hohlleiters (also >0) vorgeschlagen wird. Angedacht sind verschiedene Messvorrichtungen. Wird der Empfangs-Koppler zwischen dem Projektil - Boden und Sendekoppler platziert, kann nachdem Durchgang des Projektils gemessen werden. Kommt der Empfangs-Koppler zwischen Projektilspitze und Sendekoppler zu liegen, erfolgt die Messung der Mündungsgeschwindigkeit vor dem Durchflug des Projektils. Bevorzugt wird die Kombination beider Messmethoden, so dass entsprechend wenigstens zwei Empfangskoppler vorgesehen sind, während der Sendekoppler dann zwischen den beiden Empfangskopplern zu platzieren ist. Der Signalerzeuger (z. B. Oszillator) liefert ein Signal mit konstanter Mittenfrequenz, welche unterhalb der kleinsten Grenzfrequenz des Hohlleiters Hohlleiters betrieben wird. Gegeben durch die Geometrie und Art des Sendekopplers (Spule, Dipol etc.) werden mehrere Hohlleiter - Moden ($TE_{mn}$ mit m= 0, 1, 2 ... und n= 1, 2, 3...) angeregt. Der Signalerzeuger erzeugt entweder einen Träger im Dauerstrich-Betrieb (CW-Betrieb) oder ein moduliertes Signal. Der Abstand des Sende- und der Empfangskoppler wird hierbei so gewählt, dass das Empfangsignal durch den Term ein Single- Modus (n=1) dominiert wird. Dadurch ist aber eine bestimmte Hohlleiter- bzw. Waffenrohrlänge einzuhalten.

Auf dieses Prinzip aufsetzend stellt sich die Erfindung die Aufgabe, die Länge des Hohlleiters bzw. des Waffenrohres reduzieren zu können.

Gelöst wird die Aufgabe verfahrenstechnisch durch die Merkmale des Anspruchs 1 sowie vorrichtungstechnisch durch die Merkmale des Patentanspruchs 5. Vorteilhafte Ausführungen sind in den Unteransprüchen aufgeführt.

Der Erfindung liegt die Idee zugrunde, eine Verkürzung des Messaufbaus durch Verringerung des Abstandes zwischen Empfangs- und Sendekoppler bis vorzugsweise 0 mm zu realisieren. Die Umsetzung dieser Idee wird jedoch dadurch erschwert, dass bei Unterschreitung eines bestimmten Abstandes der Koppler nicht mehr einzelne Terme ermittelbar sind, sondern sogenannte Summenfelder. Das macht es notwendig, diese Summenfelder aufzuspalten, um daraus die Mündungsgeschwindigkeit $v_0$ zu bestimmen.

So wird ähnlich der DE 10 2008 024 574 A1 zuerst das vom Sendekoppler verursachte Quellenfeld gemessen, wenn also kein Projektil im Hohlleiter ist. Durch den Vorbeiflug des Projektils am Empfangskoppler ergibt sich bekanntlich ein charakteristisches, reflektiertes Summensignal, das zeitlich abgetastet in einer Auswerteeinrichtung eingelesen wird. In diesem Summensignal ist die Information über die Geschwindigkeit $v_0$ des Geschosses enthalten ($\Delta z(t)$), kann aber nicht direkt ausgelesen werden. Daher wird zur Realisierung des erfinderischen Gedankens die induzierte Spannung gemessen und von dieser das Quellenfeld abgezogen. Das verbleibende reflektierte (elektromagnetische) Summenfeld wird dann softwaremäßig aufgeteilt in einzelne Terme, so dass mehrere Geschwindigkeiten über die Zeit ermittelt werden. Aus diesen wird dann über eine Mittelwertbildung eine extrem genaue Geschossgeschwindigkeit bestimmt.

Durch die kürzere Baulänge der Messanlage wird insbesondere bei der Verwendung von Unterkalibergeschossen eine Gefährdungsreduzierung durch wegfliegende Treibspiegel innerhalb der Messvorrichtung bewirkt. Ebenso wird eine Gewichtsreduzierung erzielt, die die Stabilität der Waffe erhöht. Die Messgenauigkeit steigt, da das Verfahren robuster gegen Vibration und Stöße während der Schussabgabe ist.

Für Munitionen im 35 mm Kaliberbereich kann die Oszillatorfrequenz bevorzugt im Bereich zwischen 40 MHz und 80 MHz liegen, ist aber auf einen bestimmten Wert selbst nicht festgelegt. Für andere Kaliber können andere Frequenzbereiche vorgesehen werden. Dieser Frequenzbereich (40 MHz und 80 MHz) ermöglicht die einfache Beschaffung von Bauteilen für diesen Frequenzbereich, insbesondere da Bauteiltoleranzen keinen Einfluss auf das Messverfahren haben. Zudem werden nur noch geringe elektromagnetische Emissionen abgegeben.

Anhand eines Ausführungsbeispiels mit Zeichnung soll die Erfindung näher erläutert werden.

Es zeigt:

Fig. 1    eine Messvorrichtung zur Messung der Geschwindigkeit vor dem Projektil,

Fig. 2 eine Messvorrichtung zur Messung der Projektilgeschwindigkeit hinter dem Projektil,

Fig. 3 eine Darstellung des Ablaufs der Signalverarbeitung beider Messverfahren.

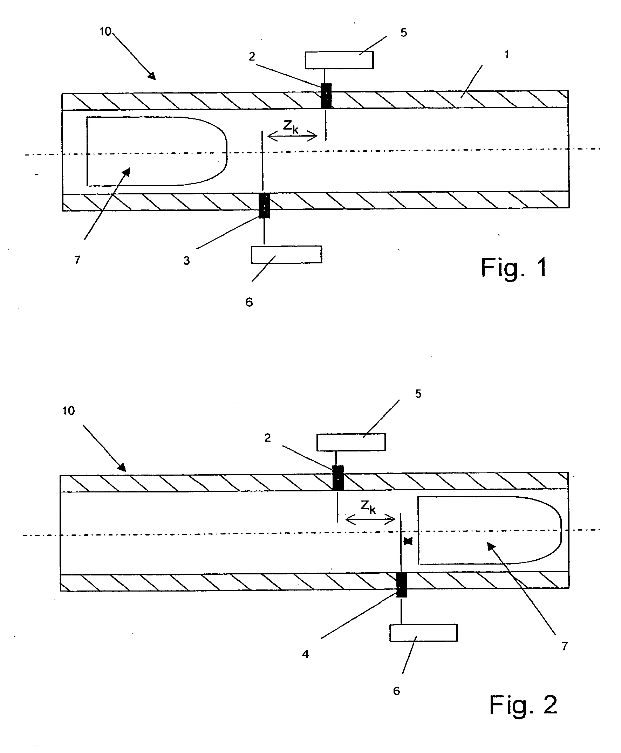

In den Fig. 1 und 2 ist mit 1 ein Hohlleiter bzw. ein Waffen- bzw. Abschussrohr und/oder Teile der Mündungsbremse gekennzeichnet, in dem ein Senderkoppler 2 eingebunden ist. Vom Senderkoppler 2 in Richtung Rohrlagerung beabstandet ist in Fig. 1 ein Empfangskoppler 3. In Fig. 2 ist ein Empfangskoppler 4 in Richtung Mündung vom Senderkoppler 2. Der Sendekoppler 2 ist mit einem Oszillator 5 elektrisch verbunden. Die beiden Empfangskoppler 3, 4 sind ihrerseits mit einer Auswerteeinrichtung 6 verbunden. Eine Kombination der Anordnung der beiden Empfangskoppler 3, 4 in eine Messanordnung 10 wird bevorzugt, ist aber nicht Bedingung. Durch den Hohlleiter 1 / Waffenrohr verschossen wird ein Projektil 7, dessen Geschwindigkeit $v_0$ gemessen werden soll. Diese Anordnung ist bereits aus der DE 10 2008 024 574.7 bekannt, auf die sich hier bezogen wird.

Mit $Z_K$ ist der Abstand zwischen Sendekoppler 2 und dem jeweiligen Empfangskoppler 3, 4 bezeichnet. Die Positionierung der Koppler 2, 3, 4 zueinander wird nach der DE 10 2008 024 574.7 über eine induzierte Spannung des Oszillators 5 bestimmt, die nach folgender Formel ermittelt wird:

$$U_{IND} \approx A_1 * e^{\frac{P_1}{a} * z_K}$$

Dabei ist $U_{IND}$ der Wert der induzierten Spannung $A_1$ bzw. $A_1$ die Messamplitude, $p_1$ eine gegebene Konstante, die sich direkt aus der Lösung der Maxwell - Gleichungen des Messsystems 10 ergibt, a der Innendurchmesser des Hohlleiters 1. Dieser Innendurchmesser a sollte mindestens gleich oder bevorzugt etwas größer sein als der Rohrkaliber der Waffe. Mit $z_k$ ist der Abstandswert zwischen Sender 2 und Empfänger 3, (4) definiert. Dieser Abstand wird nummerisch bestimmt und experimentell verifiziert derart, dass von den Termen $p_1$ nur der erste Term $p_1$ dominiert. Er ist dabei fest eingestellt. Dieser Wert ist für jeden Durchmesser der Messvorrichtung 10 / des Hohlleiters 1 bestimmt und unabhängig von der verwendeten Munition 7.

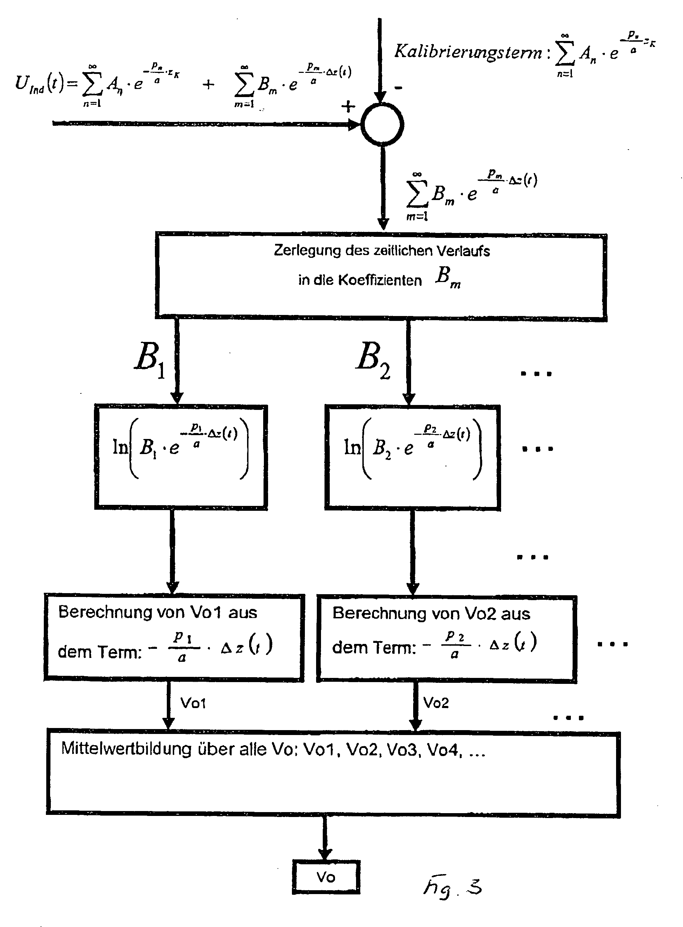

Um den Hohlleiter 1 nunmehr in seiner Baulänge verkürzen zu können bei gleichzeitiger Erhöhung der Messgenauigkeit der $V_o$ - Messung wird beispielsweise eine Signalverarbeitung nach Fig. 3 vorgeschlagen

Der Abstand zwischen Projektilboden bzw. Projektilspitze und dem Empfangskoppler 3 bzw. 4 wird mit $\Delta z(t)$ bezeichnet, wobei t die Zeit ist. Zu beachten ist, dass $\Delta z(t) = 0$mm ist, wenn der Projektilboden (-spitze) den Empfangskoppler 3, 4 passiert.

Für die Verkleinerung des Bauraums wird nun $z_k$ verkleinert. Damit wird der Wert vom bestimmten Wert für den Single- Mode- Betrieb abweichen. D. h., wird $z_k$ kleiner gewählt, dominiert dieser Single -Mode- Betrieb nicht mehr und die induzierte Spannung hat wieder die Formel

$$U_{IND} = \sum_{n=}^{\infty} A_n * e^{\frac{Pn}{a} * z_K}$$

Die Terme des obigen Ausdrucks sind zeitlich konstant, wobei die einzelnen Glieder unterschiedlich schnell im Raum abklingen.

Entfernt bzw. nähert sich das Projektil 7 dem Empfangskoppler 3, 4. wird, wie in Fig. 3 näher beschrieben, eine induzierte Spannung $U_{IND}$ gemessen. Der erste Term "A" dieser Formel ist zeitlich konstant und kann zur Kalibrierung verwendet werden. Er wird vorzugsweise dauernd, insbesondere aber kurz vor dem Schuss gemessen, wenn sich also noch kein Projektil 7 im Hohlleiter 1 befindet. Diese Werte werden kontinuierlich abgespeichert, vorzugsweise im Schieberegister der Auswerteeinheit 6. Durch eine derartige Kalibrierung werden alle Veränderungen in den Konstanten, die sich beispielsweise durch Temperatureffekte in der Waffe ergeben, eliminiert. Wird nun bei einem Schuss der Verlauf des Signals $U_{IND}$ mit dem zweiten Term "B" zeitlich abgetastet, kann eine weitere Signalverarbeitung gemäß Fig. 3 ausgeführt werden.

In einem ersten Schritt wird daher nach Messung von der induzierten Spannung $U_{IND}$ (t) der Kalibrierungsterm "A" von $U_{IND}$ subtrahiert. Übrig bleibt das so genannte Summenfeld (reflektiertes elektromagnetisches Feld) - der Term "B". Danach wird der zeitliche Verlauf des Summenfeldes "B" in die Koeffizienten $B_m$ zerlegt. Deren Bestimmung kann über bekannte Kurvenanpassungsverfahren unter Berücksichtigung bekannter Optimierungsvorgaben erfolgen, wie z. B. Methode der kleinsten Quadrate. Die Wahl der Optimierungsvorgaben wird beeinflusst durch Art und Stärke des Rauschens, welches auf dem Signal von $U_{IND}$ liegt.

Mit dem Koeffizienten $B_m$ können nun parallel die Terme $B_1$, $B_2$, $B_3$ ... $B_m$ gebildet werden, da $p_m$ und a (Innenradius des Hohlleiters 1) bekannt sind. Von jedem Term wird nun der Logarithmus genommen. Bei dieser mathematischen Operation entsteht ein Offset - Term, der nur von dem bekannten Wert $B_m$ abhängig ist und durch Subtraktion kompensiert wird. Als Zwischenergebnis entsteht ein weiterer Term mit bekanntem $p_m$, a und $v_0 = \Delta z/t$. Damit wird pro Term 1, 2, 3... m eine Mündungsgeschwindigkeit $v_{01'}$, $v_{02}$, $v_{03}$ ... $v_{0m}$ berech-

net. Durch Mittelwertbildung aller $v_{01\text{-}m}$ wird das Schlussergebnis $v_0$ bestimmt. Durch diese Mittelwertbildung wird die Genauigkeit in der Bestimmung von $v_0$ erhöht.

Das vorgeschlagene Verfahren erlaubt die Abstandreduzierung von Sende- 2 und Empfangskoppler 3, 4 von $z_k$ auf bis zu 0 mm, so dass der Hohlleiter zumindest in diesem Bereich verkürzt werden kann. Im Idealfall ($z_k$ = 0 mm) sollte der Sendekoppler 2 die Aufgabe des(r) Empfangskoppler 3, 4 übernehmen können, so dass die induzierte Spannung direkt am Sendekoppler 2 gemessen wird.

Zur Vereinfachung können weitere Signalmodifikationen z. B. über Mischverfahren zur Frequenzreduktion der Auswerteelektronik 6 vorgeschaltet werden (nicht näher dargestellt). Für die Erhöhung der Auswertegeschwindigkeit sollte das Schieberegister ausreichend groß dimensioniert sein, so dass beispielsweise Werte in Messabständen von "pro Sekunde" aufgenommen und somit für die Auswertung alle Daten der Kalibrierung genutzt werden können.

## Patentansprüche

1. Verfahren zur Messung der Mündungsgeschwindigkeit ($v_0$) eines Projektils (7) oder dergleichen mit einem als Hohlleiter betriebenen Waffen- bzw. Abschussrohr und/oder Teile der Mündungsbremse (1), mit den Schritten:

   - Messung des elektromagnetischen Feldes des Waffen- bzw. Abschussrohres und/oder Teile der Mündungsbremse (1) ohne Projektil (7) zur Ermittlung eines Kalibrierterms (A),
   - die Messung des elektromagnetischen Feldes vor dem Projektil (7) bzw. nach dem Projektil (7) oder in Kombination zur Ermittlung einer induzierten Spannung ($U_{IND}$) über die Zeit (t),
   - Abzug des Kalibrierterms (A) von der induzierten Spannung ($U_{IND}$) zur Ermittlung eines reflektierten elektromagnetischen Feldes (B)
   - Bestimmung der Mündungsgeschwindigkeit ($v_0$) aus den gemessenen Signalen derart, **dadurch gekennzeichnet, dass**

   - das reflektierte Feld (B) in Koeffizienten ($B_m$) zerlegt wird, mit denen Terme ($B_1$, $B_2$, $B_3$ ...$B_m$) gebildet werden, wobei
   - pro Term ($B_1$, $B_2$, $B_3$ ...$B_m$) eine Mündungsgeschwindigkeit ($v_{01}$, $v_{02}$, $v_{03}$ ... $v_{0m}$) berechnet und
   - durch eine Mittelwertbildung aller Mündungsgeschwindigkeiten ($v_{01}$, $v_{02}$, $v_{03}$... $v_{0m}$) der Terme ($B_1$, $B_2$, $B_3$ ...$B_m$) die Mündungsgeschwindigkeit ($v_0$) des Projektils (7) bestimmt wird.

2. Verfahren nach Anspruch 1, **dadurch gekennzeichnet, dass** die Signale dauernd zeitlich abgetastet und die Abtastwerte gespeichert werden.

3. Verfahren nach Anspruch 1 oder 2, **dadurch gekennzeichnet, dass** die Zerlegung der Koeffizienten ($B_m$) über bekannte Kurvenanpassungsverfahren unter Berücksichtigung bekannter Optimierungsvorgaben erfolgt, wie z. B. Methode der kleinsten Quadrate.

4. Verfahren nach einem der Ansprüche 1 bis 3, **dadurch gekennzeichnet, dass** für Projektile (7), die im 35 mm Kaliberbereich liegen, eine Oszillatorfrequenz bevorzugt im Bereich zwischen 40 MHz und 80 MHz liegt und für andere Kaliber andere Frequenzbereiche vorgesehen werden können.

5. System zur Durchführung des Verfahren nach einem der Ansprüche 1 bis 4, mit einem Waffen- bzw. Abschussrohr und/oder Teile der Mündungsbremse (1), welches zur Messung der Mündungsgeschwindigkeit ($v_0$) eines Projektils (7) oder dergleichen als Hohlleiter betrieben wird, mit einem Signalerzeuger (5), welcher über eine Signalzuführung mit einem Sende-Koppler (2) zur Anregung des Waffen- bzw. Abschussrohr und/oder Teile der Mündungsbremse (1) elektrisch verbunden ist und mit einer Empfangsleitung zur Weiterleitung der an wenigstens einem Empfangs-Koppler (3, 4) gemessenen Signale an eine Auswerteeinrichtung (6), **dadurch gekennzeichnet, dass** eine Abstandsreduzierung ($z_K$) zwischen dem Sende- Koppler (2) und dem Empfangs-Koppler (3, 4) = 0 mm ermöglicht wird.

6. System nach Anspruch 5, **dadurch gekennzeichnet, dass**, wenn der Abstand ($z_K$) zwischen dem Sende- Koppler (2) und dem wenigstens einen Empfangs- Koppler (3, 4) 0 mm beträgt, der Sende- Koppler (2) die Aufgabe des Empfangs-Kopplers (3, 4) übernimmt.

7. System nach einem der Ansprüche 5 oder 6, **dadurch gekennzeichnet, dass** der Auswerteeinheit (6) Signalmodifikationen, wie Mischverfahren zur Frequenzreduktion vorgeschaltet werden können.

## Claims

1. Method for measuring the muzzle velocity ($v_0$) of a projectile (7) or the like with a weapon barrel or launcher tube and/or parts of the muzzle brake (1) operated as a waveguide, involving the steps:

   - measurement of the electromagnetic field of the weapon barrel or launcher tube and/or parts of the muzzle brake (1) without the projectile (7) to determine a calibrating term (A),

- measurement of the electromagnetic field in front of the projectile (7) or behind the projectile (7) or in combination to determine an induced voltage ($U_{IND}$) over time (t),
- subtraction of the calibrating term (A) from the induced voltage ($U_{IND}$) to determine a reflected electromagnetic field (B),
- determination of the muzzle velocity ($v_0$) from the measured signals in such a way that is **characterized in that**

    - the reflected field (B) is broken down into coefficients ($B_m$), with which terms ($B_1$, $B_2$, $B_3...B_m$) are formed, wherein
    - a muzzle velocity ($v_{01}$, $v_{02}$, $v_{03}...v_{0m}$) is calculated per term ($B_1$, $B_2$, $B_3...B_m$) and
    - by finding the average of all muzzle velocities ($v_{01}$, $v_{02}$, $V_{03}...v_{0m}$) of the terms ($B_1$, $B_2$, $B_3...B_m$), the muzzle velocity ($v_0$) of the projectile (7) is determined.

2. Method according to Claim 1, **characterized in that** the signals are continually sampled in time and the sample values stored.

3. Method according to Claim 1 or 2, **characterized in that** the coefficients ($B_m$) are broken down using known curve fitting methods, taking account of known optimization requirements, such as the least squares method.

4. Method according to one of the Claims 1 to 3, **characterized in that**, for projectiles (7) within the 35 mm caliber range, an oscillator frequency falls preferably within the 40 MHz to 80 MHz range and different frequency ranges can be provided for different calibers.

5. System to implement the method according to one of Claims 1 to 4, heaving a weapon barrel or launcher tube and/or parts of the muzzle brake (1), which is operated as a waveguide to measure the muzzle velocity ($v_0$) of a projectile (7) or the like, with a signal generator (5), which is electrically connected to a transmitting coupler (2) via a signal supply to excite the weapon barrel or launcher tube and/or parts of the muzzle brake (1), and with a receiving line to transfer the signals measured at at least one receiving coupler (3, 4) to an revaluation device (6) **characterized in that** a reduction in the distance ($z_k$) between the transmitting coupler (2) and the receiving coupler (3, 4) = 0 mm is made possible.

6. System according to Claim 5, **characterized in that** when the distance ($z_k$) between the transmitting coupler (2) and the at least one receiving coupler (3, 4) is 0 mm, the transmitting coupler (2) assumes the function of the receiving coupler (3, 4).

7. System according to either of Claims 5 and 6, **characterized in that** signal modifications, such as mixing methods for frequency reduction, can precede the evaluation unit (6).

## Revendications

1. Procédé de mesure de la vitesse à la bouche ($v_0$) d'un projectile (7) ou similaire avec un canon ou un tube de lancement utilisé comme un guide d'ondes et/ou des parties du frein de bouche (1), comprenant les étapes suivantes :

    - mesure du champ électromagnétique du canon ou du tube de lancement et/ou des parties du frein de bouche (1) sans projectile (7) afin de déterminer un terme de calibrage (A),
    - mesure du champ électromagnétique avant le projectile (7) ou après le projectile (7) ou en combinaison afin de déterminer une tension induite ($U_{IND}$) en fonction du temps (t),
    - soustraction du terme de calibrage (A) de la tension induite ($U_{IND}$) afin de déterminer un champ électromagnétique réfléchi (B),
    - détermination de la vitesse à la bouche ($v_0$) à partir des signaux ainsi mesurés, **caractérisé en ce que**
    - le champ réfléchi (B) est décomposé en coefficients ($B_m$) avec lesquels sont formés des termes ($B_1$, $B_2$, $B_3$, ..., $B_m$),
    - une vitesse à la bouche ($v_{01}$, $v_{02}$, $v_{03}$, ..., $v_{0m}$) étant calculée pour chaque terme ($B_1$, $B_2$, $B_3$, ..., $B_m$) et
    - la vitesse à la bouche ($v_0$) du projectile (7) est définie par un calcul de la valeur moyenne de toutes les vitesses à la bouche ($v_{01}$, $v_{02}$, $v_{03}$, ..., $v_{0m}$) des termes ($B_1$, $B_2$, $B_3$, ..., $B_m$).

2. Procédé selon la revendication 1, **caractérisé en ce que** les signaux sont échantillonnés dans le temps continuellement et les valeurs échantillonnées sont enregistrées.

3. Procédé selon la revendication 1 ou 2, **caractérisé en ce que** la décomposition des coefficients ($B_m$) s'effectue par le biais de procédés d'adaptation de courbes connus en tenant compte d'indications d'optimisation connues comme, par exemple, la méthode du plus petit carré.

4. Procédé selon l'une des revendications 1 à 3, **caractérisé en ce que** pour des projectiles (7) qui se trouvent dans la gamme de calibre de 35 mm, une fréquence d'oscillateur se trouve de préférence dans la plage entre 40 MHz et 80 MHz et d'autres plages de fréquences peuvent être prévues pour d'autres calibres.

**5.** Système pour mettre en oeuvre le procédé selon l'une des revendications 1 à 4, avec un canon ou un tube de lancement et/ou des parties du frein de bouche (1), lequel est utilisé comme un guide d'ondes pour mesurer la vitesse à la bouche ($v_0$) d'un projectile (7) ou similaire, comprenant un générateur de signal (5) qui, par le biais d'un acheminement de signal, est relié électriquement avec un coupleur d'émission (2) destiné à exciter le canon ou le tube de lancement et/ou les parties du frein de bouche (1) et comprenant une ligne de réception destinée à retransmettre les signaux mesurés au niveau d'au moins un coupleur de réception (3, 4) à un dispositif d'interprétation (6), **caractérisé en ce qu'**une réduction de l'écart ($Z_K$) entre le coupleur d'émission (2) et le coupleur de réception (3, 4) = 0 mm est rendue possible.

**6.** Système selon la revendication 5, **caractérisé en ce que** lorsque l'écart ($Z_K$) entre le coupleur d'émission (2) et l'au moins un coupleur de réception (3, 4) est de 0 mm, le coupleur d'émission (2) prend en charge la tâche du coupleur de réception (3, 4).

**7.** Système selon l'une des revendications 5 ou 6, **caractérisé en ce que** des modifications du signal, tels que des procédés de mélange en vue d'une réduction de la fréquence, peuvent savoir lieu avant l'unité d'interprétation (6).

Fig. 1

Fig. 2

$$\text{Kalibrierungsterm}: \sum_{n=1}^{\infty} A_n \cdot e^{-\frac{p_n}{a} \cdot z_K}$$

$$U_{Ind}(t) = \sum_{n=1}^{\infty} A_n \cdot e^{-\frac{p_n}{a} \cdot z_K} \quad + \quad \sum_{m=1}^{\infty} B_m \cdot e^{-\frac{p_m}{a} \cdot \Delta z(t)}$$

$$\sum_{m=1}^{\infty} B_m \cdot e^{-\frac{p_m}{a} \cdot \Delta z(t)}$$

Zerlegung des zeitlichen Verlaufs

in die Koeffizienten $B_m$

$B_1$ $\qquad$ $B_2$ $\qquad$ ...

$$\ln\left( B_1 \cdot e^{-\frac{p_1}{a} \cdot \Delta z(t)} \right) \qquad \ln\left( B_2 \cdot e^{-\frac{p_2}{a} \cdot \Delta z(t)} \right) \quad \ldots$$

...

Berechnung von Vo1 aus

dem Term: $-\dfrac{p_1}{a} \cdot \Delta z(t)$

Berechnung von Vo2 aus

dem Term: $-\dfrac{p_2}{a} \cdot \Delta z(t)$

...

Vo1 $\qquad$ Vo2 $\qquad$ ...

Mittelwertbildung über alle Vo: Vo1, Vo2, Vo3, Vo4, ...

Vo $\qquad$ Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0023365 A2
- DE 102006058375 A1
- DE 102008024574
- DE 102008024574 A1
- DE 1020080245747